**Europäisches Patentamt**

**European Patent Office**

**Office européen des brevets**

(19)

(11) Veröffentlichungsnummer: **0 155 681**
**A2**

(12) # EUROPÄISCHE PATENTANMELDUNG

(21) Anmeldenummer: **85103240.9**

(22) Anmeldetag: **20.03.85**

(51) Int. Cl.⁴: **B 29 B 17/02**
**B 03 B 9/06**

(30) Priorität: **20.03.84 DE 3410124**

(43) Veröffentlichungstag der Anmeldung:
**25.09.85 Patentblatt 85/39**

(84) Benannte Vertragsstaaten:
**AT BE CH DE FR GB IT LI LU NL SE**

(71) Anmelder: **AluPlast Aluminium - Plastik Recycling GmbH**
**Ostrampe**
**D-5440 Mayen(DE)**

(72) Erfinder: **Buzga, Heinrich, Ing. grad.**
**Hölderlinstrasse 4**
**D-4048 Grevenbroich 5(DE)**

(74) Vertreter: **Patentanwälte Zellentin**
**Zweibrückenstrasse 15**
**D-8000 München 2(DE)**

(54) **Verfahren zum Reinigen von Kunststoffteilchen.**

(57) Die Erfindung betrifft ein Verfahren zum Reinigen von Kunststoffteilchen, insbesondere von verschmutzten vorzerkleinerten Kunststoff-Folienabfällen. Erfindungsgemäß suspendiert man die vorzerkleinerten Kunststoffteilchen in starker Verdünnung in einer Flüssigkeit, beschleunigt die Suspension stark, leitet sie über Produktaufhalter, hält dort die Teilchen kurzzeitig, bewegt sie dabei hin und her und befreit sie mit Hilfe der auf hohe Geschwindigkeit beschleunigten Flüssigkeit, gegebenenfalls unter gleichzeitigem Hindurchleiten durch einen Spalt, von Verunreinigungen.

EP 0 155 681 A2

./...

Croydon Printing Company Ltd.

Fertiggut

Fig 1

- 1 -

0155681

"Verfahren zum Reinigen von Kunststoffteilchen"

Die vorliegende Erfindung betrifft ein Verfahren zum Reinigen von Kunststoffteilchen, insbesondere von verschmutzten vorzerkleinerten Kunststoff-Folienabfällen.

Üblicherweise werden Kunststoffteilchen und auch -folien zum Zwecke der Wiederverwendung als Regranulat mit Hilfe von Messern, z.B. mit Messerwalzen oder Schneidmühlen, zerkleinert und anschließend gewaschen.

Beim Zerkleinern löst sich zwar ein Teil der Verunreinigungen ab, anhaftende, klebende Verunreinigungen, wie z.B. Papier, und insbesondere anhaftender oder angeklebter Schmutz, können jedoch zumindest nicht vollständig vom Folienmaterial abgetrennt werden und verbleiben auch nach dem Waschen darauf. Derartige Verunreinigungen sind jedoch insbesondere bei der Herstellung von Blasfolien wegen des durch sie verursachten Aufreißens ausgesprochen störend.

Die Aufarbeitung von Kunststoffteilchen, z.B. von Folienabfall, beschränkt sich daher auf wenig verschmutzte Teilchen, insbesondere auf solche, die keine angeklebten Verunreinigungen aufweisen.

Der Erfindung liegt dieAufgabe zugrunde, ein Verfahren anzugeben, mit dessen Hilfe auch stark verunreinigte Kunststoffteilchen zuverlässig auch von angeklebten Verunreinigungen gereinigt werden können.

Diese Aufgabe wird durch ein Verfahren zum Reinigen von Kunststoffteilchen, insbesondere von verschmutzten vorzerkleinerten Kunststoff-Folienabfällen gelöst, bei dem man die vorzerkleinerten Kunststoffteilchen in starker Verdünnung in einer Flüssigkeit suspendiert, die Suspension stark beschleunigt, über Produktaufhalter leitet, dort die Teilchen kurzzeitig hält, hin- und herbewegt und mit Hilfe der auf hohe Geschwindigkeit beschleunigten Flüssigkeit, gegebenenfalls unter gleichzeitigem Hindurchleiten durch einen Spalt, von Verunreinigungen befreit.

Durch diese Maßnahmen werden die in starker Verdünnung in einer Flüssigkeit - die als Transportflüssigkeit dient - suspendierten Kunststoffteilchen mit der Flüssigkeit (z.B. Wasser) auf eine derart hohe Geschwindigkeit beschleunigt, daß, wenn sie kurzzeitig an den Produktaufhaltern hängenbleiben, durch die Aufhalter in der beschleunigten Flüssigkeitsströmung erzeugte Wirbel, hin- und herbewegt, umströmt und abgespült werden. Dies verstärkt ganz erheblich den Angriff der Flüssigkeit auf die anhaftenden bzw. angeklebten Verunreinigungen, die dadurch von der Oberfläche der Kunststoffteilchen abgezogen und gegebenenfalls unter gleichzeitiger Reibung an den Wänden des Spalts abgetragen werden. Wenn mehrere Produktaufhalter in Bewegungsrichtung hintereinander angeordnet sind, wiederholen sich die geschilderten Vorgänge. Durch die Zahl der auf die Kunststoffteilchen einwirkenden Produktaufhalter wird der erzielbare Reinigungsgrad bestimmt.

Durch die Wahl des Abstands zwischen Rotor- und Stator und damit der Breite des Spaltes kann die Reibungswirkung insbesondere bei eng gewähltem Spalt erhöht werden, insbesondere im Zusammenhang mit den Produktaufhaltern und der beschleunigten Strömung kann es dann auch zu weiteren Zerkleinerungen der Kunststoffteilchen kommen. Die Reinigungswirkung wird durch ein gleichzeitiges Zerkleinern der Kunststoffteilchen gesteigert, da neue Angriffskanten entstehen.

Vorzugsweise führt man die Suspension axial einer Rotationsmühle mit radialem Rotor und gegenüberliegendem Stator zu, wobei Rotor und/oder Stator Produktaufhalter aufweisen, und beschleunigt unter starker Querschnittsverengung zwischen Rotor und Stator und führt radial ab, wobei die Förderung und Beschleunigung mit Hilfe von am Rotor angeordneten Förderorganen durchgeführt wird.

Hierdurch wird die Suspension ständig beschleunigt. Zunächst tritt eine erhebliche Beschleunigung dadurch auf, daß der radiale Spalt eine erheblich geringere - sich gegebenenfalls verjüngende - lichte Weite aufweist als die axiale Einführungsöffnung, deren Querschnitt sich vorzugsweise auch verjüngen kann, was ebenfalls zu einer Beschleunigung führt. Die zum Zerkleinern der Kunststoffteilchen aufzuwendende Kraft steigt umgekehrt proportional zur abnehmenden Teilchengröße. Ein mehrfaches Zerkleinern der Teilchen erfordert daher auch eine gleichzeitige Steigerung der Strömungsgeschwindigkeit der Suspensionsflüssigkeit. Außerdem trägt die Zentrifugalkraft erheblich zur Beschleunigung bei.

Optimale Verhältnisse treten dann ein, wenn sich der Durchmesser des axialen Eintrittsquerschnitts der Mühle zur Breite des Spaltes zwischen Rotor und Stator wie 100 bis 200 : 0,01 verhält, wobei die Querschnittsfläche am Eintritt der Suspension zur Austrittsfläche des Spalts ein Verhältnis von 150 bis 200 : 1 aufweist und wobei die Breite des Spaltes der Stärke der Kunststoffteilchen angenähert ist.

Die Breite des Spaltes zwischen Rotor und Stator ist vorzugsweise auf eine Größe eingestellt, die der Schichtdicke der Kunststoffteilchen entspricht oder nur geringfügig größer ist. Damit entsteht gleichzeitig noch eine erhebliche Reibung zwischen der Oberfläche der Kunststoffteilchen und dem Rotor bzw. Stator, was letztlich zu einem besonders sauberen Produkt führt, da die anhaftenden Verunreinigungen so entweder abgerieben oder zumindest aufgelockert und von der vorbeiströmenden Flüssigkeit abgelöst werden.

Der Rotor wird vorzugsweise mit einer Drehzahl von etwa 3000 U/min angetrieben, hierbei treten auch keine erheblichen Geräuschbelästigungen auf.

Vorzugsweise werden die vorzerkleinerten Kunststoffteilchen vor dem Eintritt in den Spalt zwischen Rotor und Stator mechanisch durch einen auf der Rotorwelle angeordneten und in die axiale Einführungsöffnung ragenden Schneidkopf weiter zerkleinert. Hierdurch werden weitere Angriffsflächen geschaffen. Sofern ein Schneidkopf vorgeschaltet ist, kann auch die Reinigung mit nur einem einzigen Produktaufhalterpaar auf Stator und Rotor vorgenommen werden. Vorteilhafterweise werden jedoch über den Radius von Rotor und Stator verteilt mehrere Produktaufhalter nacheinander angeordnet, um, wie oben geschildert, die Reinigungswirkung zu steigern und auch - bei eng gewählter Spaltbreite - auf gewünscht kleine Teilchengrößen zu kommen.

Vorzugsweise wird die einen hohen Flüssigkeitsanteil und abgetrennte Verunreinigungen aufweisende Kunststoffteilchensuspenion einer Sichtung in einem Trennbehälter oder einem Hydrozyklon, gegebenenfalls unter vorheriger Abtrennung der Flüssigkeit, unterworfen.

Im einfachsten Falle kann die Sichtung dadurch erfolgen, daß man die Verunreinigungen, die in der Regel schwerer als die Kunststoffteilchen sind, einfach zum Boden absinken läßt. Es erfolgt eine vollständige Trennung in schwimmfähiges und nicht schwimmfähiges Material. Unter der Einwirkung durch die vorstehend beschriebene Behandlung haben sich z.B. auch saugfähige Verunreinigungen mit geringer Dichte, z.B. Papier, vollständig mit Transportflüssigkeit vollgesogen und sinken ebenfalls ab.

Die oben schwimmenden, spezifisch leichteren Kunststoffteilchen können abgetrennt, getrocknet und einem Extruder zugeführt werden. Die nach unten abgesunkenen Verunreinigungen können von der Flüssigkeit abgetrennt werden. Die abgetrennte Flüssigkeit kann rezirkuliert werden.

Vorzugsweise nimmt man die Sichtung mit Hilfe einer laminaren Umlaufströmung in einem oder mehreren Trennbehältern vor, wobei die Dichte der Flüssigkeit so eingestellt ist, daß alle Kunststoffteilchen oder bestimmte Fraktionen aufschwimmen. Durch die laminare Umlaufströmung kann die Trennung beschleunigt werden. Es besteht hierbei auch die Möglichkeit, die Strömung in den einzelnen Trennbehältern mit mit Flüssigkeiten unterschiedlicher Dichte zu erzeugen, wodurch auch Kunststoffteilchen unterschiedlicher Dichte separiert werden können. Als einfachste Lösung kann die Suspensionsflüssigkeit eine Dichte aufweisen, die ein Aufschwimmen des Kunststoffmaterials und ein Absinken der Verunreinigungen ermöglicht, die spezifisch schwerer sind als der Kunststoffanteil. Sofern man in den einzelnen Trennbehältern Flüssigkeiten anderer Dichte einsetzt, ist es vorteilhaft, die Suspensionsflüssigkeit mit den abgesunkenen Komponenten vorher ganz oder teilweise abzutrennen. Die Abtrennung kann z.B. durch Überleiten über ein Sieb erfolgen. Das vorherige Abtrennen von Flüssigkeit hat den Vorteil, daß die Trennbehälter kleiner dimensioniert werden können und das Einstellen der jeweils im Trennbehälter gewünschten Flüssigkeitsdichte erleichtert wird.

Mit Hilfe genau eingestellter, vorzugsweise wäßriger Salzlösungen ist es möglich, aus Kunststoffteilchengemischen zunächst die leichteste Komponente oben abzuziehen und dann die absinkende Mischung aus Verunreinigung und weiterer (weiteren) Kunststoffkomponente(n) in einer bzw. mehreren weiteren Sichtung(en) mit entsprechend eingestellter(n) Salzlösung(en) in gleicher Weise aufzuarbeiten, um die

nächst leichtere Komponente abzutrennen.

Die Sichtung in umlaufender laminarer Strömung kann vorzugsweise folgendermaßen vorgenommen werden:

Der oder die (nacheinander geschalteten) Trennbehälter weist (weisen) oberhalb des Badpegels leicht in diesen eintauchende Förderorgane, wie z.B. Paddelwellen auf, die die Flüssigkeit im wesentlichen parallel zur Badoberfläche unter Vermeidung einer Wirbelbildung bewegen, was sich durch geeignete Bewegungsgeschwindigkeit leicht erreichen läßt. An der Behälterwandung wird die Strömung nach unten abgelenkt. Gegebenenfalls durch entsprechende Einbauten unterstützt, erfährt die Strömung am Boden des Trennbehälters eine Umlenkung in horizontaler Richtung auf die gegenüberliegende Behälterwandung, wo sie wiederum nach oben umgelenkt wird. Es entsteht eine im wesentlichen laminare umlaufende Strömungswalze, in der ein Teil der Kunststoffteilchen und die gesamten Verunreinigungen mitgeführt werden, die allmählich die Walze nach unten unter Vermeidung einer Rückverschmutzung verlassen, wohingegen nach und nach die spezifisch leichteren Kunststoffteilchen nach oben aufschwimmen und abgezogen, weiter behandelt oder einer entsprechenden weiteren Sichtung in einem oder mehreren nachgeschalteten Behältern unterworfen werden können. Die Sichtung kann aber auch mit Hilfe von Hydrozyklonen erfolgen.

Vorzugsweise wird das Gewichtsverhältnis von Flüssigkeit zu Kunststoffteilchen in der Suspension und/oder in den Trennbehältern zwischen 20:1 bis 40:1 eingestellt.

Damit ist für eine gleichmäßige Verteilung der zu suspendierenden Teilchen gesorgt, wodurch Inhomogenitäten und durch zu hohe Konzentration verursachte Verstopfungen bei der erfindungsgemäßen Behandlung vermieden werden.

Die relativ hohe erfindungswesentliche Verdünnung sorgt unter anderem auch dafür, daß die Produktaufhalter auch immer wieder von den anhaftenden Teilchen befreit werden.

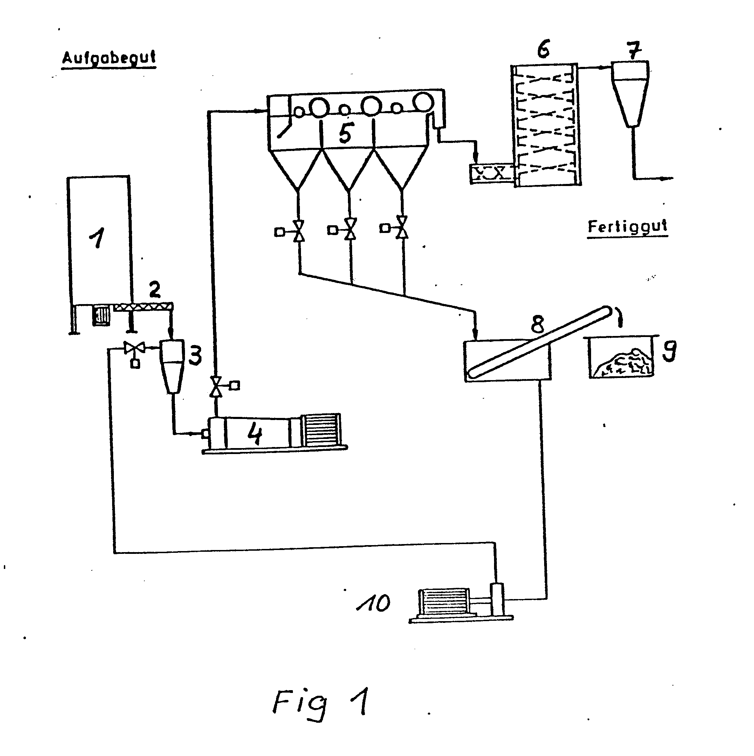

Das in Fig. 1 dargestellte Verfahrensschema zeigt schematisch einen beispielsweisen Ablauf der Aufarbeitung von Kunststoffteilchen, hier Kunststoffolienabfällen.

Aus einem Silo 1 wird vorzerkleinerter, vorher von groben Anteilen, wie Steinen und Metallstücken, befreiter Kunststoffolienabfall über eine Waage 2 - gegebenenfalls in vorsuspendiertem Zustand - in einen Behälter 3 eingeführt und in einer Flüssigkeit suspendiert. Dieser kann z.B. ein Zyklon sein, wodurch die an der Wandung des Behälters 3 anliegende umlaufende Flüssigkeit die auftreffenden Kunststoffteilchen sofort mitreißt.

Die erhaltene Suspension wird in die Zerkleinerungs- und Reinigungsvorrichtung 4 überführt - hier eine Rotationsmühle -, wobei die Zuführung der Suspension axial und der Austritt radial erfolgt. Aus der Zerkleinerungs- und Reinigungsvorrichtung 4 gelangt die Suspension in Sichtbehälter 5, gegebenenfalls mit Flüssigkeiten mit unterschiedlicher Dichte, wo die Verunreinigungen absinken und die Kunststoffteilchen aufschwimmen. Letztere werden abgetrennt und in einer Trokkenvorrichtung 6,7 auf die geforderte Restfeuchte getrocknet.

Die Verunreinigungen gelangen zusammen mit der Trennflüssigkeit auf einen Siebförderer und werden in einen Behälter 9 ausgeschleust. Die abgetrennte Flüssigkeit, die ohne weiteres noch Anteile an Verunreinigungen aufweisen darf, wird über eine Pumpe 10 rezirkuliert. Flüssigkeit kann auf die gleiche Weise bereits vor dem Eintritt in die Sichtbehälter abgezogen werden.

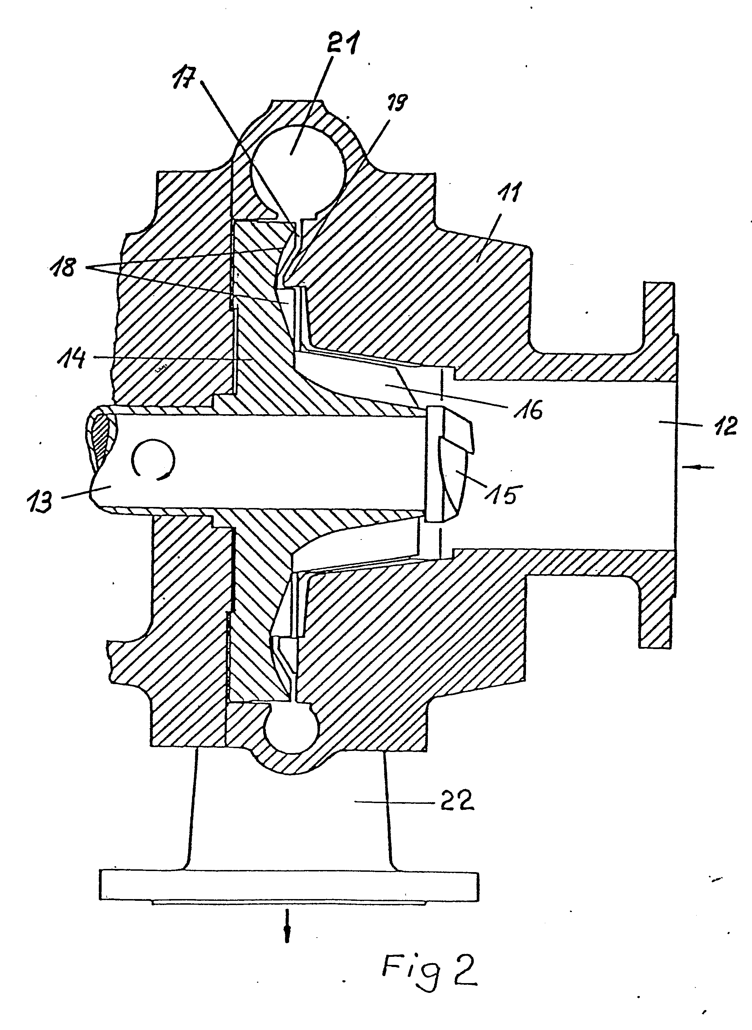

Eine erfindungsgemäß als Zerkleinerungs- und Reinigungsvorrichtung einsetzbare Rotationsmühle kann wie in Fig. 2 dargestellt aufgebaut sein. Derartige Rotationsmühlen sind an sich bekannt und dienen z.B. der Zerkleinerung von Fleischabfällen, die mit Hilfe eines Stopfwerkes zugeführt werden können.

Der Stator 11 weist einen axialen zentralen Produkteinzug 12 auf, in den eine Welle 13 hineinragt.

Auf der Welle 13 ist ein Rotor 14 befestigt. Das in den Produkteinzug 12 hineinragende Ende der Welle 13 trägt einen Schneidkopf 15. Der Produkteinzug 12 ist im Anschluß an den Schneidkopf 15 ebenso wie der Rotor 14 konisch erweitert. Hierdurch wird der axiale Spalt verjüngt. In der Erweiterung sind vorzugsweise Einstellwinkel aufweisende Turbinenflügel 16 auf der Welle 13 montiert, um die Förderleistung der Suspension in axialer Richtung weiter zu verstärken.

Zwischen Rotor 14 und Stator 11 befindet sich ein einstellbarer Spalt 17 mit einer lichten Weite, die in Abhängigkeit von der Schichtstärke des zu verarbeitenden Folienmaterials eingestellt wird. Der Spalt 17 setzt sich aus einem axialen und einem radialen Teil zusammen. Der Spalt 17 wird einerseits von der Oberfläche des Stators 11 und andererseits von der des Rotors 14 begrenzt.

Der Rotor 14 weist radial angeordnete Förderorgane 18 mit Ausnehmungen in Form von Schaufeln auf, in die auf dem Stator 11 angeordnete Produktaufhalter 10 eingreifen. Durch das Zusammenwirken von Schaufeln und Produktaufhalter 19, aber auch der Schaufeln bzw. der Produktaufhalter 19 mit der Strömung wird auch mechanisch auf die Folienteilchen quasi wie mit Messern eingewirkt.

Der radiale Spalt mündet in einem Ringkanal 21, aus dem die Suspension radial abgezogen wird.

Eine zur Durchführung der Erfindung einsetzbare Vorrichtung kann auch ein Strömungsrohr sein, das Einbauten in Form von Messern, Keilen oder mehr oder weniger scharfkantigen Vorsprüngen aufweist. Um eine Strömungsbeschleunigung zu erzielen, kann beispielsweise das Strömungsrohr eine kontinuierliche oder stufenweise Querschnittsverengung aufweisen. Die Suspension wird dabei durch das Strömungsrohr gepumpt, vorzugsweise gesaugt.

Beispiel

In einer handelsüblichen Rotationsmühle (Trigonalmühle) mit einem Eintrittsquerschnitt von 177 cm$^2$ (Durchmesser 150 mm) und einem Rotor-Stator-Durchmesser von 350 mm mit einer Spaltbreite von o,11 mm (Austrittsquerschnitt 1,1 cm$^2$) und als Produktaufhalter wirkenden Einbauten am Stator, wurde bei einer Drehzahl von 3000 U/min und einer Antriebsleistung von 37 kW eine Suspension aus 40 m$^3$ Wasser und 15000 kg auf etwa Handtellergröße vorzerkleinerte, stark verunreinigte Polyäthylenfolienschnitzel pro Stunde durchgesetzt.

Die die Mühle verlassenden Teilchen wiesen eine Größe von durchschnittlich 15 x 15 mm auf.

Nach einer Sichtung in einem Trennbehälter wiesen die Folienteilchen eine vollständige Oberflächenreinheit auf.
Nach Trocknung waren die Teilchen direkt in einem Extruder reganulierbar.

AluPlast GmbH

Ostrampe

D-5440 Mayen

20. März 1985

Eu 85 400

RZ/Hu

Patentansprüche:

1. Verfahren zum Reinigen von Kunststoffteilchen, insbesondere von verschmutzten vorzerkleinerten Kunststoff-Folienabfällen,

dadurch gekennzeichnet,

daß man die vorzerkleinerten Kunststoffteilchen in starker Verdünnung in einer Flüssigkeit suspendiert, die Suspension stark beschleunigt, über Produktaufhalter leitet, dort die Teilchen kurzzeitig hält, hin- und herbewegt und mit Hilfe der auf hohe Geschwindigkeit beschleunigten Flüssigkeit, gegebenenfalls unter gleichzeitigem Hindurchleiten durch einen Spalt, von Verunreinigungen befreit.

2. Verfahren nach Anspruch 1, dadurch gekennzeichnet, daß man die Suspension axial einer Rotationsmühle mit radialem Rotor und gegenüberliegendem Stator zuführt, wobei Rotor und/oder Stator Produktaufhalter aufweisen, und unter starker Querschnittsverengung zwischen Rotor und Stator beschleunigt und radial abführt, wobei die Förderung und Beschleunigung mit Hilfe von am Rotor angeordneten Förderorganen durchgeführt wird.

3. Verfahren nach Anspruch 1 oder 2, dadurch gekennzeichnet, daß sich der Durchmesser des axialen Eintrittsquerschnitts der Mühle zur Breite des Spaltes zwischen Rotor und Stator wie 100 bis 200 : 0,01 verhält, wobei die Querschnittsfläche am Eintritt der Suspension zur Austrittsfläche des Spalts ein Verhältnis von 150 bis 200 : 1 aufweist und wobei die Breite des Spalts der Stärke der Kunststoffteilchen angenähert ist.

4. Verfahren nach einem der Ansprüche 1 bis 3, dadurch gekennzeichnet, daß der Rotor mit einer Drehzahl von 3000 U/min umläuft.

5. Verfahren nach einem der Ansprüche 2 bis 4, dadurch gekennzeichnet, daß die Suspension auch axial durch Querschnittsverengung beschleunigt wird.

6. Verfahren nach einem der Ansprüche 1 bis 5, dadurch gekennzeichnet, daß die vorzerkleinerten Kunststoffteilchen vor dem Eintritt in den Spalt zwischen Rotor und Stator mechanisch durch einen auf der Rotorwelle angeordneten und in die axiale Einführungsöffnung ragenden Schneidkopf weiter zerkleinert werden.

7. Verfahren nach einem der Ansprüche 1 bis 6, dadurch gekennzeichnet, daß die einen hohen Flüssigkeitsanteil und abgetrennte Verunreinigungen aufweisende Kunststoffteilchensuspension einer Sichtung in einem Trennbehälter oder einem Hydrozyklon, gegebenenfalls unter vorheriger Abtrennung von Flüssigkeit, unterworfen wird.

8. Verfahren nach Anspruch 7, dadurch gekennzeichnet, daß man die Sichtung mit Hilfe einer laminaren Umlaufströmung in einem oder mehreren Trennbehältern vornimmt, wobei die Dichte der Flüssigkeit so eingestellt ist, daß alle Kunststoffteilchen oder bestimmte Fraktionen aufschwimmen.

0155681

9. Verfahren nach einem der Ansprüche 1 bis 8, dadurch gekennzeichnet, daß man das Gewichtsverhältnis von Flüssigkeit zu Kunststoffteilchen in der Suspension und/oder in den Trennbehältern zwischen 20 : 1 bis 40 : 1 einstellt.

0155681

*112*

Aufgabegut

Fertiggut

Fig 1

Fig 2